# FASCICULE DE BREVET EUROPEEN

(11) **EP 3 421 350 B1**
(45) Date de publication et mention de la délivrance du brevet: **07.10.2020**
(21) Numéro de dépôt: 18170490.9
(22) Date de dépôt: 03.05.2018
(51) Int. Cl.: B64C 1/14, B60J 10/70, F16B 11/00

(54) **ASSEMBLAGE ENTRE UN CHASSIS ET UN ELEMENT ANNEXE, AERONEF COMPORTANT UN TEL ASSEMBLAGE ET PROCEDES DE SOLIDARISATION ET DE DESOLIDARISATION D'UN TEL ASSEMBLAGE**
MONTAGEEINHEIT AUS EINEM RAHMEN UND EINEM ZUSATZELEMENT, LUFTFAHRZEUG, DAS EINE SOLCHE MONTAGEEINHEIT UMFASST, UND BEFESTIGUNGS- UND ENTKOPPLUNGSVERFAHREN EINER SOLCHEN MONTAGEEINHEIT
ASSEMBLY BETWEEN A FRAME AND AN ASSOCIATED ELEMENT, AIRCRAFT COMPRISING SUCH AN ASSEMBLY AND METHODS FOR SECURING AND RELEASING SUCH AN ASSEMBLY

(30) Priorité: 30.06.2017 FR 1770695
(43) Date de publication de la demande: 02.01.2019
(73) Titulaire: Airbus Helicopters, 13725 Marignane Cedex (FR)
(72) Inventeur: BEDUS, Olivier, 13121 Aurons (FR); PERRET, Adrien, 13122 Ventabren (FR); NEGREL, Florence, 13400 Aubagne (FR); GAIA, Lilian, 13008 Marseille (FR)
(74) Mandataire: GPI & Associés

(56) Documents cités:
- EP-A1- 2 610 097
- EP-A2- 0 298 788
- DE-A1- 19 621 577
- FR-A1- 2 766 156
- US-A1- 2005 200 163

## Description

La présente invention se rapporte au domaine des assemblages entre un châssis muni d'une bordure et un élément annexe tel une bande, un profil formé dans un matériau opaque ou encore un panneau comportant une paroi au moins partiellement translucide ou transparente, tel un parebrise ou un hublot.

Plus particulièrement, l'invention concerne les assemblages soumis à des sollicitations mécaniques et/ou vibratoires importantes pouvant par exemple être réalisés par une solidarisation selon une liaison de type encastrement par un collage entre l'élément annexe et le châssis au moyen notamment d'un intermédiaire de collage tel que de la colle, un joint d'étanchéité ou un mastic de type aéronautique dit "PR" à base de caoutchouc liquide polysulfure apte à polymériser à température ambiante. Un tel assemblage au moyen d'un intermédiaire de collage peut également être réalisé de façon complémentaire par un serrage de moyens de solidarisation réversible tels que notamment des vis coopérant avec des taraudages complémentaires ménagés dans le châssis.

Par exemple, il est ainsi connu des documents DE 196 21 577, EP 0 298 788, FR 2 766 156 différents types d'assemblages entre un châssis, un élément annexe au moyen d'un joint de colle.

Par ailleurs, de tels assemblages de ce type peuvent également comporter au moins une excroissance telle une entretoise, un pion, un téton ou une bobine, agencée dans le joint de colle et formant un obstacle au découpage de joint de colle. En outre, le joint de colle peut présenter une épaisseur prédéterminée qui est avantageusement sensiblement constante. L'excroissance s'étend alors au moins partiellement dans l'épaisseur du joint de colle entre le châssis et l'élément annexe.

Cependant, si de tels assemblages sont très efficaces pour résister à de tels niveaux de sollicitations mécaniques et/ou vibratoires, ils peuvent se révéler très problématiques pour permettre de réaliser le remplacement d'un élément annexe endommagé. En effet, la présence d'une excroissance noyée dans le joint de colle n'est pas compatible avec les procédés classiques permettant de réaliser un découpage continu du joint de colle tel que notamment décrit dans le document EP 0 093 283.

Par suite, et tel que décrit par le demandeur dans le document EP 2 610 097, il a également été conçu des dispositifs de fixation réversible destinés à être noyés dans un joint de colle et en étant agencés parallèlement à une direction longitudinale du joint de colle correspondant à la direction d'application d'un tel joint de colle. En outre, ces dispositifs de fixation comportent des fils d'extraction traversant des plots formant un jeu d'excroissances destiné à être agencé à la périphérie d'un élément annexe tel un parebrise pour giravion.

Cependant, de tels dispositifs de fixation sont invasifs pour les plots et nécessitent de procéder au remplacement des plots une fois le joint de colle découpé. De plus, de tels dispositifs sont complexes à positionner et à maintenir en place sur un châssis et peuvent également engendrer des problèmes d'étanchéité si un des plots n'est pas correctement positionné.

En outre, un tel dispositif de fixation tel que décrit dans le document EP 2 610 097 ne peut être utilisé a postériori pour permettre de remplacer un élément annexe d'un assemblage entre un châssis et cet élément annexe. Pour pouvoir utiliser un tel type dispositifs de fixation, il faut que l'assemblage ait été initialement conçu avec des plots tels que décrits dans le document EP 2 610 097.

De tels plots ne sont en effet pas escamotables une fois l'assemblage réalisé et ne peuvent pas être remplacés par des plots amovibles. Par suite, contrairement aux plots décrits dans le document EP 2 610 097, lorsqu'un châssis ou un élément annexe comporte des plots intégrés non escamotables, ceux-ci ne doivent surtout pas être endommagés lors d'un démontage de l'élément annexe.

Le document US 2005 / 0200163 décrit quant à lui un assemblage entre un châssis et une vitre ou un parebrise de véhicule motorisé. Conformément à cet assemblage, une corde continue peut être noyée dans toute la périphérie d'un joint de colle de manière à servir, en cas d'urgence, de moyen d'aide au découpage du joint de colle. Un moyen motorisé peut notamment permettre d'effectuer un effort de traction sur l'une des extrémités de cette corde qui émerge alors du joint de colle.

L'autre extrémité de cette corde semble quant à elle être noyée dans le joint de colle.

De plus, des actionneurs peuvent également être noyés dans le joint de colle de manière à assurer, toujours en cas d'urgence, une désolidarisation rapide entre la vitre et le châssis du véhicule. Dans ce cas, la corde, restant noyée dans le joint de colle, passe alors localement au dessus des actionneurs de manière à pouvoir effectuer un découpage partiel de celui-ci selon une direction transversale orientée vers l'intérieur de l'ouverture ménagée dans le châssis.

Autrement dit, la corde n'est pas agencée à proximité et autour des actionneurs et ne comporte en aucun cas deux extrémités libres émergeant du joint de colle. Ainsi l'assemblage décrit dans le document US 2005 / 0200163 ne permettrait en aucun cas de découper à l'aide de la corde un joint de colle agencé à proximité et autour d'une excroissance dont la fonction est justement d'effectuer une désolidarisation rapide entre la vitre et le châssis du véhicule.

La présente invention a alors pour objet de proposer un assemblage et un aéronef équipé d'un tel assemblage comportant des moyens d'aide au découpage d'un joint de colle au moins à proximité et autour d'excroissances permettant de s'affranchir des limitations mentionnées ci-dessus. En effet, un tel assemblage permet ultérieurement de désolidariser un élément annexe d'un châssis en étant sans risque pour des excroissances formant un obstacle au découpage du joint de colle.

Un autre objectif est également de proposer un procédé de désolidarisation visant à faciliter le découpage d'un joint de colle équipant un assemblage comportant des excroissances agencées dans le joint de colle. Cette aide au découpage est alors au moins réalisée à proximité et autour de ces excroissances et permet de garantir leur intégrité une fois l'élément annexe déposé du châssis.

L'invention se rapporte donc à un assemblage comportant un châssis muni d'une bordure, un élément annexe rapporté au niveau de la bordure du châssis, un joint de colle agencé à l'interface entre une première face du châssis et une deuxième face de l'élément annexe et au moins une excroissance agencée dans le joint de colle et formant au moins un obstacle au découpage du joint de colle, cette (ou ces) excroissance(s) s'étend(ent) au moins partiellement entre la première face du châssis et la seconde face de l'élément annexe, un tel assemblage comportant des moyens d'aide au découpage du joint de colle, les moyens d'aide au découpage comportant au moins un organe longiligne partiellement noyé à l'intérieur du joint de colle.

Selon l'invention, le (ou les) organe(s) longiligne(s) est (sont) remarquable en ce qu'il(s) est (sont) agencé(s) au moins à proximité et autour de la (ou des) excroissance(s) et en ce que l'(ou les) organe(s) longiligne(s) comporte deux extrémités libres émergeant du joint de colle.

Autrement dit, un tel assemblage permet de réaliser un découpage du joint de colle à proximité et autour des excroissances formées par exemple par des entretoises, des pions, des tétons ou des bobines grâce à un (ou des) organe(s) longiligne(s) prépositionné(s) dans le joint de colle à la fabrication de cet assemblage. De tels organes longilignes peuvent notamment se présenter sous la forme de fils ou de gaines aptes à recevoir un (ou des) fil(s). Les organes longilignes sont donc suffisamment souples pour pouvoir entourer au moins partiellement une (ou des) excroissance(s) agencée(s) dans le joint de colle.

De plus, lorsqu'on exerce un effort de traction sur l'une au moins des deux extrémités libres d'un organe longiligne, une portion centrale de cet organe longiligne située entre les deux extrémités libres se déplace pour découper le joint de colle suivant une direction radiale par rapport à l'excroissance. De cette manière la portion centrale de l'organe longiligne vient entourer totalement ou quasi-totalement cette excroissance et découpe toute la colle qui l'entoure.

Selon un premier exemple de réalisation, le (ou les) organe(s) longiligne(s) peut(peuvent) comporter deux extrémités libres émergeant du joint de colle d'un même côté par rapport au joint de colle.

Ainsi, chaque organe longiligne entoure une excroissance ou un groupe d'excroissances en effectuant un changement d'orientation d'au moins 180°. Un organe longiligne selon ce premier exemple de réalisation permet alors de découper le joint de colle en effectuant un effort de traction sur un fil dont l'une des extrémités peut être solidarisée à un point fixe de l'assemblage.

Selon un second exemple de réalisation, le (ou les) organe(s) longiligne(s) peut(peuvent) comporter deux extrémités libres émergeant du joint de colle des deux côtés opposés par rapport au joint de colle.

Dans ce cas, chaque organe longiligne entoure une excroissance ou un groupe d'excroissances en effectuant un changement d'orientation d'au moins 360°. Un tel agencement peut être avantageux puisqu'il permet de localiser les opérations de maintenance permettant de réaliser une dépose d'un élément annexe d'un seul côté de cet élément annexe tel que par exemple à l'intérieur d'un cockpit d'aéronef lorsqu'il s'agit de remplacer un parebrise ou tout autre type de hublot.

Avantageusement, le (ou les) organe(s) longiligne(s) peut(peuvent) comporter au moins un fil.

Un tel fil doit alors comporter une longueur suffisamment grande pour émerger du joint de colle et permettre sa solidarisation avec un point fixe ou un système d'enroulement permettant d'exercer sur le fil un effort de traction. Les extrémités du fil peuvent également comporter des moyens d'accroche permettant de faciliter leur solidarisation respective.

Un tel fil peut notamment être réalisé dans un matériau choisi par exemple parmi le groupe comportant les aciers, les polymères et les fibres textiles à haute ténacité tel que le verre, carbone ou l'aramide.

De plus, un organe longiligne peut comporter plusieurs fils juxtaposés parallèlement mais espacés les uns des autres de manière à être agencés dans différentes zones du joint de colle. Chaque fil d'un même organe longiligne permet alors de découper une largeur prédéterminée du joint de colle autour d'une excroissance.

En pratique, le (ou les) organe(s) longiligne(s) peut(peuvent) comporter au moins une gaine passe-fil destinée à recevoir au moins un fil.

Une telle gaine passe-fil peut ainsi être initialement vide ou encore être prééquipée d'un ou plusieurs fil(s). Dans le cas où la gaine passe-fil est vide, l'introduction d'un fil dans la gaine passe-fil peut être réalisée uniquement lorsqu'un besoin de découper le joint de colle se manifeste et par conséquent après polymérisation du joint de colle.

Par ailleurs, pour faciliter le maintien en position de l'organe longiligne lors de l'application du joint de colle, il peut être avantageux de solidariser le (ou les) organe(s) longiligne(s) avec l'une des faces en regard au niveau de l'interface entre le châssis et l'élément annexe.

Ainsi, selon une première variante de l'invention, l' (ou les) organe(s) longiligne(s) peut(peuvent) être préalablement solidarisé(s) avec la première face du châssis.

Une telle solidarisation préalable d'un organe longiligne peut avantageusement être réalisée au moyen d'un intermédiaire de collage apte à garantir un maintien en position au moins temporaire avant application du joint de colle.

Bien entendu, selon une seconde variante de l'invention, l' (ou les) organe(s) longiligne(s) peut(peuvent) également être préalablement solidarisé(s) avec la deuxième face de l'élément annexe.

Selon un exemple avantageux de l'invention, le (ou les) organe(s) longiligne(s) peut(peuvent) former au moins une demi-boucle autour de l' (ou des) excroissance(s).

Autrement dit, un organe longiligne entoure une excroissance en effectuant un changement d'orientation d'au moins 180° autour de celle-ci. Une telle demi-boucle permet alors de découper le joint de colle dans une première zone latérale du joint de colle située de manière opposée à une bordure longitudinale du joint de colle de laquelle peut émerger les deux extrémités libres de l'organe longiligne.

Cependant, l'organe longiligne peut avantageusement former une boucle autour d'une excroissance en effectuant alors deux changements d'orientation de 180° autour de celle-ci. Dans ce cas, le serrage d'un fil autour de l'excroissance permet alors de découper le joint de colle dans une première zone latérale du joint de colle située de manière opposée à une bordure longitudinale du joint de colle de laquelle émerge l'une des extrémités libres de l'organe longiligne mais également dans une seconde zone latérale du joint de colle située de manière opposée à la première zone latérale du joint de colle.

De cette manière, toute la largeur d'un joint de colle formé par les première et seconde zone latérales autour d'une excroissance peut être découpée en une seule opération par un unique fil formant une boucle complète autour de l'excroissance.

Avantageusement, l' (ou les) organe(s) longiligne(s) peut(peuvent) former au moins une première boucle autour d'une première excroissance et au moins une deuxième boucle autour d'une deuxième excroissance.

Selon cette caractéristique, la première boucle et la deuxième boucle peuvent être imbriquées entre elles. De cette manière, toute la longueur du joint de colle située entre la première excroissance et la deuxième excroissance peut être découpée en une seule opération par un unique fil formant la première boucle et la deuxième boucle. L'effort de traction réalisé sur le fil permet alors à chacune des deux boucles de se resserrer pour venir découper le joint de colle autour des première et deuxième excroissances.

La présente invention a aussi pour objet un aéronef comportant au moins un assemblage tel que décrit ci-dessus.

Un tel aéronef est alors avantageux car il embarque dès sa fabrication des organes longilignes noyés dans un joint de colle visant à faciliter le démontage ultérieur d'un élément annexe solidarisé en liaison de type encastrement avec un châssis au moins par collage. Dans ce cas, l'élément annexe peut notamment se présenter sous la forme d'un parebrise avant et présenter une courbure et un galbe importants. L'aéronef peut avantageusement se présenter sous la forme d'un giravion.

Comme déjà évoqué, l'invention se rapporte aussi à un procédé de solidarisation entre un châssis et au moins un élément annexe rapporté au niveau d'une bordure du châssis, le procédé de solidarisation comportant une étape de collage consistant à appliquer un joint de colle à l'interface entre une première face du châssis et une deuxième face de l'élément annexe.

Le procédé de solidarisation est remarquable en ce qu'il permet de réaliser un assemblage tel que décrit ci-dessus, le procédé de solidarisation comportant une étape préliminaire consistant à positionner entre la première face du châssis et la deuxième face de l'élément annexe l' (ou les) organe(s) longiligne(s) au moins à proximité et autour d'une (ou des) excroissance(s), l' (ou les) organe(s) longiligne(s) étant ensuite partiellement noyé(s) à l'intérieur du joint de colle lors de l'étape de collage.

En d'autres termes, une telle étape préliminaire est effectuée avant l'étape de collage du procédé de solidarisation en positionnant un (ou des) organe(s) longiligne(s) à proximité de la (ou des) excroissance(s). L' (ou les) organe(s) longiligne(s) entoure(nt) alors une excroissance en effectuant un changement d'orientation d'au moins 180° comme précédemment décrit.

L'invention concerne également un procédé de désolidarisation entre un châssis et un élément annexe rapporté au niveau d'une bordure du châssis, l'élément annexe étant solidarisé au châssis au moins par collage via un joint de colle agencé à l'interface entre une première face du châssis et une deuxième face de l'élément annexe, le procédé de désolidarisation comportant une étape d'insertion consistant à insérer au moins un fil au travers du joint de colle entre la première face du châssis et la deuxième face de l'élément annexe et une étape de découpage du joint de colle en exerçant un effort de traction sur au moins une extrémité du (ou des) fil(s).

Selon l'invention, un tel procédé de désolidarisation est remarquable en ce qu'il comporte au moins trois sous étapes de passage du (ou des) fil(s) transversalement au travers du joint de colle, les sous étapes de passage comportant d'une part une première sous étape de passage et une troisième sous étape de passage entre un premier côté et un second côté du joint de colle et d'autre part une deuxième sous étape de passage entre le second côté et le premier côté du joint de colle, la troisième sous étape de passage étant effectuée en amont de la deuxième sous étape de passage suivant une direction longitudinale du joint de colle.

En pratique, une telle direction longitudinale du joint de colle correspond à la direction d'application du joint de colle à la surface du châssis ou de l'élément annexe.

Comme déjà évoqué précédemment une telle étape d'insertion peut être mise en œuvre en utilisant une gaine passe-fil préalablement agencée et noyée dans le joint de colle. Cependant cette étape d'insertion peut également être effectuée sur un joint de colle standard c'est-à-dire non prééquipé d'une gaine passe-fil.

Pour réaliser cette étape d'insertion, il est alors nécessaire d'utiliser des outils perforants permettant de traverser le joint de colle et de faire passer le fil au travers au moins trois fois pour former au moins une boucle en effectuant un changement d'orientation d'au moins 360°. De tels outils perforants peuvent comporter une aiguille qui peut être avantageusement chauffante pour permettre de dégrader les propriétés de résilience du joint de colle et faciliter ainsi sa pénétration transversale au travers du joint de colle.

En outre une telle aiguille peut comporter un chas permettant le passage du fil et/ou d'un tire-fil de faible diamètre permettant ensuite de tirer le fil apte à découper le joint de colle. Ce fil comporte alors un diamètre sensiblement supérieur au diamètre du tire-fil.

En pratique, au moins une excroissance peut être agencée dans le joint de colle et former au moins un obstacle au découpage du joint de colle, cette (ou ces) excroissance(s) s'étendant au moins partiellement entre la première face du châssis et la seconde face de l'élément annexe. Dans ce cas, les sous étapes de passage de l'étape d'insertion peuvent être réalisées localement au travers du joint de colle à proximité et autour de l' (ou des) excroissance (s), le (ou les) fil(s) formant au moins une boucle autour de l' (ou des) excroissance(s).

Comme déjà évoqué, cette (ou ces) excroissance(s) peuvent former un plot ou une entretoise de manière à conférer au joint de colle une épaisseur prédéterminée. L' (ou les) excroissance(s) peu(ven)t être directement formée(s) par le châssis et/ou par l'élément annexe et/ou encore par une pièce rapportée et s'entendant au moins partiellement entre le châssis et l'élément annexe.

Dans ce cas, la première sous étape de passage et la troisième sous étape de passage sont réalisées en amont d'une excroissance et la deuxième sous étape de passage est réalisée en aval de cette excroissance suivant la direction longitudinale du joint de colle.

Selon un exemple de réalisation avantageux de l'invention, les sous étapes de passage de l'étape d'insertion peuvent être réalisées localement au travers du joint de colle au niveau d'une forme concave de la bordure du châssis, le (ou les) fil(s) formant au moins une boucle au niveau de la forme concave de la bordure.

Ainsi comme précédemment décrit pour une excroissance, la première sous étape de passage et la troisième sous étape de passage sont réalisées dans la forme concave en amont suivant la direction longitudinale du joint de colle et la deuxième sous étape de passage est réalisée dans cette forme concave en aval suivant la direction longitudinale du joint de colle.

Par ailleurs, les sous étapes de passage de l'étape d'insertion peuvent également être réalisées localement au travers du joint de colle au niveau d'une surface gauche de la bordure du châssis, le (ou les) fil(s) formant au moins une boucle au niveau de la surface gauche de la bordure.

De même, la première sous étape de passage et la troisième sous étape de passage sont réalisées dans la surface gauche correspondant à un galbe prononcé et localisé de l'élément annexe en amont suivant la direction longitudinale du joint de colle et la deuxième sous étape de passage est réalisée dans cette surface gauche en aval suivant la direction longitudinale du joint de colle.

Selon un exemple avantageux de l'invention, l'étape de découpage peut être réalisée en exerçant un effort de traction sur au moins une extrémité libre du (ou des) fil(s) au moyen d'un organe enrouleur permettant d'enrouler le (ou les) fil(s), l'effort de traction permettant de resserrer la (ou les) boucle(s) du (ou des) fil(s).

Un tel dispositif enrouleur peut avantageusement être maintenu en position sur l'élément annexe au moyen d'une ventouse et de moyens pour générer une dépression entre la ventouse et l'élément annexe.

En outre une manivelle permet de former un bras de levier pour permettre à un opérateur d'actionner un axe d'enroulement pour enrouler le fil sur lui-même. De cette manière, l'organe enrouleur peut exercer un effort de traction permettant de découper le joint de colle notamment autour des excroissances, d'une forme concave de la bordure du châssis et/ou d'une surface gauche de cette bordure par un resserrement de la boucle sur elle-même. Bien entendu, ce dispositif enrouleur peut également être utilisé pour découper toute autre portion d'un joint de colle, la bordure du châssis pouvant dans ce cas être sensiblement de forme rectiligne courbée ou convexe.

L'invention et ses avantages apparaîtront avec plus de détails dans le cadre de la description qui suit avec des exemples donnés à titre illustratif en référence aux figures annexées qui représentent :
- la figure 1, une vue de face d'un assemblage vitré conforme à l'invention,
- la figure 2, une vue en coupe partielle d'un assemblage vitré au niveau de l'interface entre un châssis et un panneau vitré, conformément à l'invention
- les figures 3 à 5, des vues de face selon différents exemples de réalisation d'assemblages vitrés conformes à l'invention,
- les figures 6 à 7, des vues en coupe partielle selon deux variantes d'assemblages vitrés, conformément à l'invention,
- les figures 8 à 9, des vues de face selon d'autres exemples de réalisation d'assemblages vitrés conformes à l'invention,
- la figure 10, une vue de côté d'un aéronef équipé d'un assemblage vitré, conformément à l'invention,
- la figure 11, un premier logigramme illustrant les étapes du procédé de solidarisation conforme à l'invention,
- la figure 12, un second logigramme illustrant les étapes du procédé de désolidarisation conforme à l'invention, et
- les figures 13 à 17, des vues de face illustrant différentes variantes du procédé de désolidarisation conforme à l'invention.

Les éléments présents dans plusieurs figures distinctes peuvent être affectés d'une seule et même référence.

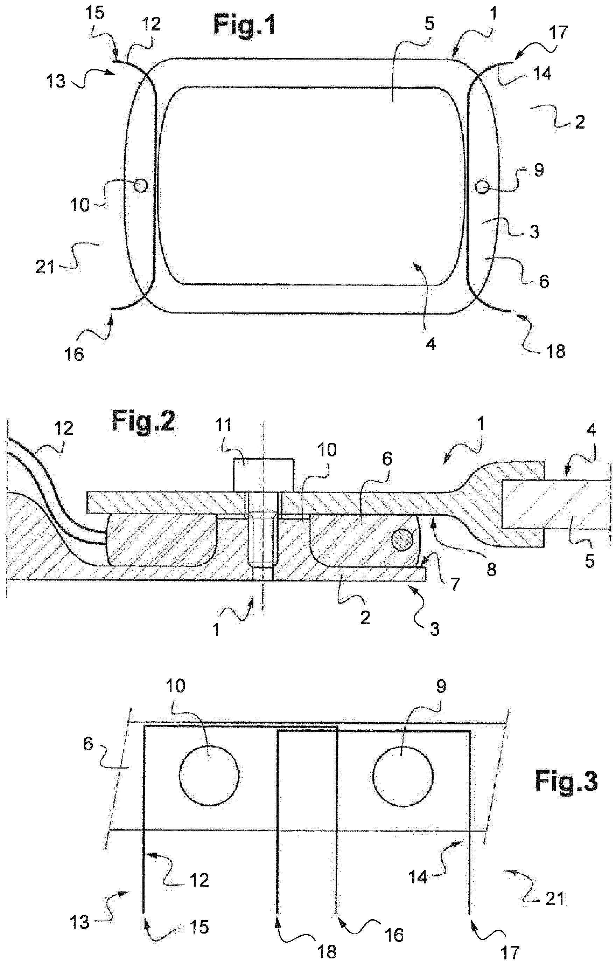

Tel que représentée à la figure 1, l'invention concerne un assemblage 1 entre un châssis 2 comportant une bordure 3 au niveau de laquelle est rapporté un élément annexe 4 pouvant par exemple comporter une paroi 5 au moins partiellement transparent ou translucide.

En outre, un tel assemblage 1 est réalisé à l'aide d'un joint de colle 6 rapporté au niveau de la bordure 3 du châssis 2. Des excroissances 9, 10 peuvent notamment permettent de définir un écartement prédéterminé pour conférer au joint de colle 6 une épaisseur prédéterminée sur toute sa longueur.

En effet telles que représentées à la figure 2, les excroissances 9, 10 forment des obstacles au découpage du joint de colle 6. Selon cet exemple de réalisation, les excroissances 9, 10 peuvent émerger d'une première face 7 du châssis 2 pour venir au contact d'une deuxième face 8 de l'élément annexe 4. De telles excroissances 9, 10 peuvent alors comporter par exemple des taraudages permettant de réaliser une liaison de type encastrement par vissage avec des moyens de solidarisation réversible 11 supplémentaires.

Selon d'autres variantes non représentées, les excroissances 9, 10 peuvent être formées par des tétons, des pions ou des bobines rapportées et s'étendant au moins partiellement entre la première face 7 du châssis 2 et la deuxième face 8 de l'élément annexe 4.

Par ailleurs, un tel assemblage 1 comporte également des moyens d'aide au découpage 13 comportant un (ou des) organe(s) longiligne(s) 12 et/ou 14 noyé(s) au moins partiellement dans le joint de colle 6 et entourant l'une au moins des excroissances 9 et 10 en effectuant un changement d'orientation. Dans l'exemple de réalisation de la figure 1, un tel changement d'orientation permet de positionner les deux extrémités libres 15, 17 et 16, 18 d'un même côté 21 du joint de colle 6 agencé dans ce cas en regard d'une face extérieure du châssis 2.

Chaque organe longiligne 12 et 14 peut notamment comporter au moins un fil ou une gaine passe-fil permettant l'introduction d'un fil à l'intérieur du joint de colle 6.

Tel que représenté à la figure 2, l'organe longiligne 12 est formé par un fil directement noyé dans le joint de colle 6 lors de son application sur le châssis 2. Un tel agencement permet ainsi de faciliter le découpage ultérieur du joint de colle 6 lorsque le l'élément annexe 4 doit être remplacé. Un effort de traction sur l'une au moins des extrémités libres 15 et 16 de l'organe longiligne 12 permet en effet de cisailler le joint de colle 6 par un rapprochement de l'organe longiligne 12 vers l'excroissance 10.

Tel que représenté à la figure 3, les moyens d'aide au découpage 13 comportent deux organes longilignes 12, 14 avantageusement formant deux demi-boucles se chevauchant partiellement. Une telle superposition des deux demi-boucles permet alors de découper en totalité une portion de joint de colle 6 agencée entre deux excroissances 9, 10 juxtaposées.

Selon cet exemple de réalisation de l'invention, les extrémités libres 15, 17 et 16, 18 des organes longilignes 12, 14 sont également agencées d'un même côté 21 du joint de colle 6.

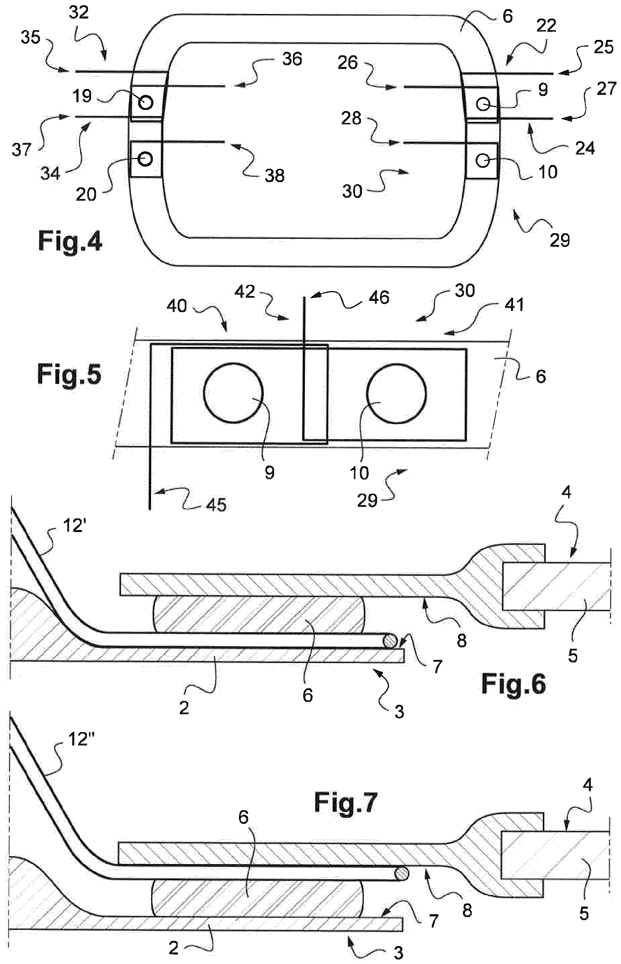

Cependant tels que représentés à la figure 4, les organes longilignes 22, 24, 32, 34 peuvent également former des boucles agencées autour des excroissances 9, 10, 19, 20 en réalisant un changement d'orientation de 360°. Dans ce cas, les extrémités libres 25, 27, 35, 37 et 26, 28, 36, 38 émergent alors des deux côtés opposés 29 et 30 par rapport à une direction d'application ou la direction longitudinale du joint de colle 6.

Tel que représenté à la figure 5, selon une autre variante de l'invention, un même organe longiligne 42 peut également former une première boucle 40 autour d'une première excroissance 9 et une deuxième boucle 41 autour d'une deuxième excroissance 10, les première et deuxième boucles 40 et 41 se chevauchant avantageusement.

Par ailleurs telles que représentées, les extrémités libres 45 et 46 de l'organe longiligne 42 sont agencées de part et d'autre du joint de colle 6 au niveau de deux côtés opposés 29 et 30.

Tel que représenté à la figure 6 selon une première variante d'assemblage, l'organe longiligne 12' peut être préalablement solidarisé avec la première face 7 du châssis 2. De cette manière, l'organe longiligne 12' reste précisément positionné par rapport au châssis 2 lors de l'application du joint de colle 6.

Par ailleurs tel que représenté à la figure 7 selon une deuxième variante d'assemblage, l'organe longiligne 12" peut également être préalablement solidarisé avec la deuxième face 8 de l'élément annexe 4. De cette manière, le bon positionnement de l'organe longiligne 12" est garanti lors de l'assemblage entre le châssis 2 et l'élément annexe 4.

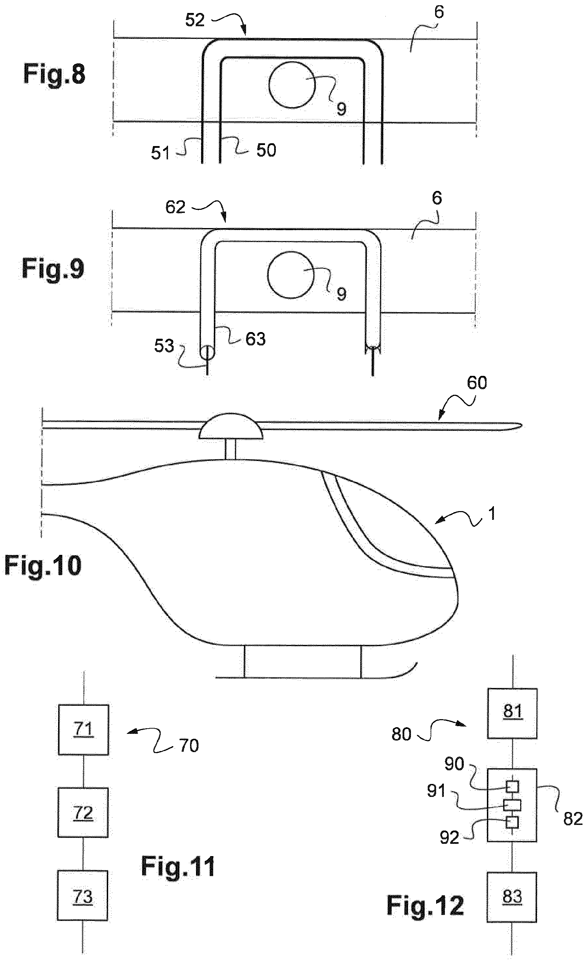

Tel que représenté à la figure 8 selon un autre exemple d'assemblage, l'organe longiligne 52 peut comporter deux fils 50, 51 juxtaposés et permettant chacun de découper une épaisseur ou une largeur prédéterminée du joint de colle 6 autour d'une excroissance 9. Les deux fils 50, 51 peuvent alors être sollicités en traction simultanément ou encore successivement l'un après l'autre pour découper le joint de colle 6 autour de l'excroissance 9.

Selon un autre exemple d'assemblage tel que représenté à la figure 9, l'organe longiligne 62 comporte une gaine passe-fil 63 qui est apte à recevoir un fil 53. Ce fil 53 peut être mis en place simultanément avec la gaine passe-fil 63 lors de l'assemblage par collage dans le joint de colle 6 ou encore une fois le joint de colle 6 réalisé. De cette manière, le fil 53 est placé dans la gaine passe-fil 63 uniquement lorsqu'il est nécessaire de découper le joint de colle 6 autour de l'excroissance 9 pour procéder au remplacement de l'élément annexe 4.

Tel que représenté à la figure 10, l'invention concerne également un aéronef 60 en général, et un giravion en particulier, équipé d'un tel assemblage 1. Plus particulièrement, un tel assemblage 1 peut être formé par un assemblage vitré notamment entre un fuselage de giravion formant châssis et un parebrise avant de l'aéronef 60 formant l'élément annexe.

En outre, la figure 11 est une représentation schématique du procédé de solidarisation 70 permettant de réaliser un assemblage 1 entre un châssis 2 et un élément annexe 4. Un tel précédé de solidarisation 70 comporte tout d'abord une étape préliminaire 71 consistant à positionner entre la première face 7 du châssis 2 et la deuxième face 8 de l'élément annexe 4 au moins un organe longilignes 12, 12', 12", 14, 22, 32, 42, 52, 62, 24, 34 tels que décrits aux figures 1 à 9 au moins à proximité et autour d'au moins une excroissance 9, 10, 19, 20.

Le procédé 70 comporte ensuite une étape de collage 72 consistant à appliquer un joint de colle 6 à l'interface entre une première face 7 du châssis 2 et une deuxième face 8 de l'élément annexe 4. Tel que représenté, le procédé 70 peut également avantageusement comporter une étape de serrage 73 de moyens de solidarisation réversible 11 permettant de réaliser une liaison de type encastrement entre le châssis 2 et le l'élément annexe 4.

Telle que représentée à la figure 12, l'invention se rapporte également à un procédé de désolidarisation 80 pouvant comporter une étape de desserrage 81 de moyens de solidarisation réversible 11 permettant de réaliser une liaison de type encastrement entre un châssis 2 et un élément annexe 4.

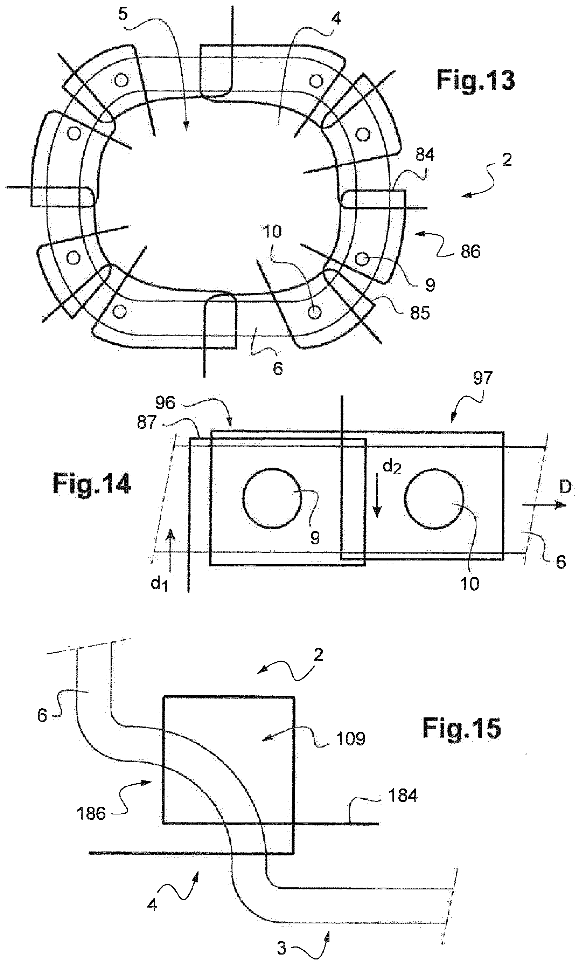

Un tel procédé de désolidarisation 80 comporte ensuite une étape d'insertion 82 consistant à insérer au moins un fil 84, 85, 87, 88, 184, 284 tel que représenté aux figures 13 à 17 entre une première face 7 du châssis 2 et une deuxième face 8 de l'élément annexe 4. En outre, un tel fil 84, 85, 87, 88, 184, 284 peut être inséré au moins à proximité et autour d'au moins une excroissance 9, 10, au niveau d'une forme concave 109 d'une bordure 3 du châssis 2 et/ou encore au niveau d'une surface gauche 209 de la bordure 3 du châssis 2.

En outre tel que représenté à la figure 14, une telle étape d'insertion 82 peut avantageusement comporter au moins une première sous étape de passage 90 du fil 87 au travers du joint de colle 6 suivant une première direction transversale d1, au moins une deuxième sous étape de passage 91 du fil 87 au travers du joint de colle 6 suivant une seconde direction transversale d2 opposée à la première direction transversale d1 et au moins une troisième sous étape de passage 91 du fil 87 au travers du joint de colle 6 suivant la première direction transversale d1. Ces première et seconde directions transversales d1 et d2 sont par ailleurs orientées sensiblement perpendiculairement par rapport à une direction longitudinale D du joint de colle 6.

Par ailleurs, la troisième sous étape de passage 92 est effectuée en amont de ladite deuxième sous étape de passage 91 suivant la direction longitudinale D dudit joint de colle 6.

Le procédé de désolidarisation 80 comporte également une étape de découpage 83 du joint de colle 6 réalisée en exerçant un effort de traction sur l'une au moins des extrémités libres du fil 84, 85, 87, 88, 184, 284.

Tel que représenté à la figure 13, les fils 84, 85 entourent respectivement une excroissance 9, 10 en formant respectivement chacun une boucle 86. Chaque boucle 86 se superpose avec les deux boucles adjacentes de manière à permettre un découpage total du joint de colle 6 agencé entre deux excroissances 9, 10 adjacentes.

La figure 14 illustre quant à elle un unique fil 87 formant une première boucle 96 autour une première excroissance 9 et une seconde boucle 97 entourant quant à elle une deuxième excroissance 10.

La figure 15 représente quant à elle le découpage d'un joint de colle 6 au niveau d'une forme concave 109 d'une bordure 3 du châssis 2. Un tel découpage est alors réalisé au moyen d'un fil 184 inséré au travers du joint de colle 6 en effectuant une boucle 186 au niveau de la forme concave 109. Une telle étape d'insertion 82 du fil 184 permet ainsi d'éviter toute sortie accidentelle du fil 184 lors de l'effort de traction permettant de découper le joint de colle 6.

Les extrémités libres du fil 184 émergent de part et d'autre du joint de colle 6 et par conséquent le fil 184 effectue un changement d'orientation de 360° en passant trois fois au travers du joint de colle 6.

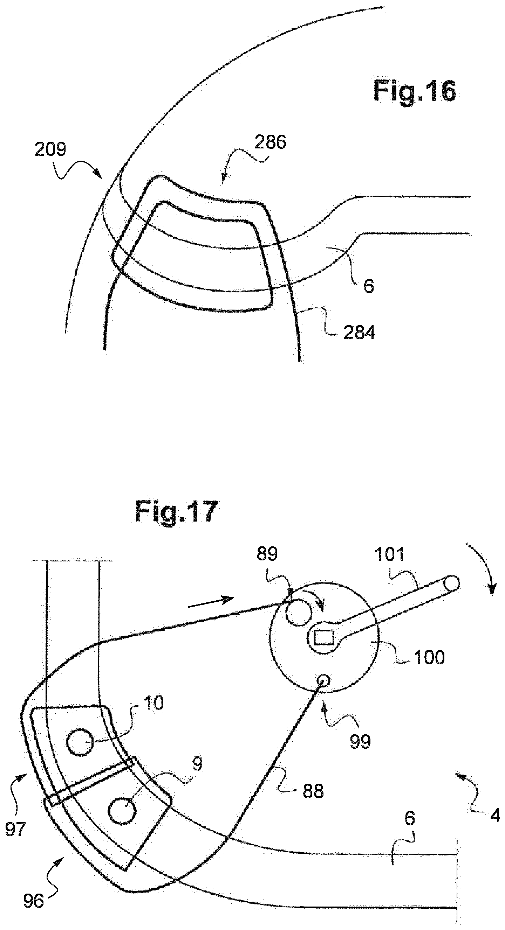

De même et tel que représenté à la figure 16, le découpage d'un joint de colle 6 peut également être réalisé au niveau d'une surface gauche 209 d'une bordure 3 du châssis 2. Une telle surface gauche 209 est ainsi formée par une zone non plane comportant un galbe prononcé par rapport au reste de la bordure 3 du châssis 2.

Dans ce cas, l'étape d'insertion 82 est alors réalisée au moyen d'un fil 284 inséré au travers du joint de colle 6 en effectuant une boucle 286 au niveau de la surface gauche 209.

Telles que représentées, les extrémités libres du fil 284 émergent d'un même côté du joint de colle 6 et le fil 284 effectue un changement d'orientation de 540° en passant quatre fois au travers du joint de colle 6.

Tel que représenté à la figure 17, l'étape de découpage 83 peut être réalisée en utilisant un organe enrouleur 100 exerçant un effort de traction sur une première extrémité libre 89 du fil 88, une seconde extrémité libre 99 du fil 88 étant quant à elle solidarisée avec un point fixe de l'organe enrouleur 100 par rapport à l'élément annexe 4. Un tel organe enrouleur 100 est alors solidarisé de manière réversible avec l'élément annexe 4 et permet, via une manivelle 101 de resserrer les deux boucles 96, 97 formées par le fil 88 autour des deux excroissances 9, 10.

Un tel organe enrouleur 100 comporte des moyens de démultiplication permettant ainsi de réduire l'effort de traction nécessaire pour réaliser un découpage manuel par un opérateur.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Assemblage (1) comportant un châssis (2) muni d'une bordure (3), un élément annexe (4) rapporté au niveau de ladite bordure (3) dudit châssis (2), un joint de colle (6) agencé à l'interface entre une première face (7) dudit châssis (2) et une deuxième face (8) dudit élément annexe (4) et au moins une excroissance (9, 10, 19, 20) agencée dans ledit joint de colle (6) et formant au moins un obstacle au découpage dudit joint de colle (6), ladite au moins une excroissance (9, 10, 19, 20) s'étendant au moins partiellement entre ladite première face (7) dudit châssis (2) et ladite seconde face (8) dudit élément annexe (4),
ledit assemblage (1) comportant des moyens d'aide au découpage (13) dudit joint de colle (6), lesdits moyens d'aide au découpage (13) comportant au moins un organe longiligne (12, 12', 12", 22, 32, 42, 52, 62, 14, 24, 34) partiellement noyé à l'intérieur dudit joint de colle (6),
**caractérisé en ce que** ledit au moins un organe longiligne (12, 12', 12", 22, 32, 42, 52, 62, 14, 24, 34) est agencé au moins à proximité et autour de ladite au moins une excroissance (9, 10, 19, 20) et **en ce que** ledit au moins un organe longiligne (12, 12', 12", 22, 32, 42, 52, 62, 14, 24, 34) comporte deux extrémités libres (15, 17, 25, 27, 35, 37, 45) et (16, 18,26, 28, 36, 38, 46) émergeant dudit joint de colle (6).

2. Assemblage selon la revendication 1,
**caractérisé en ce que** ledit au moins un organe longiligne (12, 14) comporte deux extrémités libres (15, 17) et (16, 18) émergeant dudit joint de colle (6) d'un même côté (21) par rapport audit joint de colle (6).

3. Assemblage selon la revendication 1,
**caractérisé en ce que** ledit au moins un organe longiligne (22, 24, 32, 34, 42) comporte deux extrémités libres (25, 27, 35, 37, 45) et (26, 28, 36, 38, 46) émergeant dudit joint de colle (6) des deux côtés opposés (29) et (30) par rapport audit joint de colle (6).

4. Assemblage selon l'une quelconque des revendications 1 à 3,
**caractérisé en ce que** ledit au moins un organe longiligne (52, 62) comporte au moins un fil (50, 51, 53).

5. Assemblage selon l'une quelconque des revendications 1 à 4,
**caractérisé en ce que** ledit au moins un organe longiligne (62) comporte au moins une gaine passe-fil (63) destinée à recevoir au moins un fil (53).

6. Assemblage selon l'une quelconque des revendications 1 à 5,
**caractérisé en ce que** ledit au moins un organe longiligne (12') est préalablement solidarisé avec ladite première face (7) dudit châssis (2).

7. Assemblage selon l'une quelconque des revendications 1 à 5,
**caractérisé en ce que** ledit au moins un organe longiligne (12") est préalablement solidarisé avec ladite deuxième face (8) dudit élément annexe (4).

8. Assemblage selon l'une quelconque des revendications 1 à 7,
**caractérisé en ce que** ledit au moins un organe longiligne (12, 14, 22, 24, 32, 34) forme au moins une demi-boucle autour de ladite au moins une excroissance (9, 10, 19, 20).

9. Assemblage selon l'une quelconque des revendications 1 à 8,
**caractérisé en ce que** ledit au moins un organe longiligne (42) forme au moins une première boucle (40) autour d'une première excroissance (9) et au moins une deuxième boucle (41) autour d'une deuxième excroissance (10).

10. Aéronef (60) **caractérisé en ce qu'**il comporte au moins un assemblage (1) selon l'une quelconque des revendications 1 à 9.

11. Procédé de solidarisation (70) entre un châssis (2) et au moins un élément annexe (4) rapporté au niveau d'une bordure (3) dudit châssis (2), ledit procédé de solidarisation (70) comportant une étape de collage (72) consistant à appliquer un joint de colle (6) à l'interface entre une première face (7) dudit châssis (2) et une deuxième face (8) dudit élément annexe (4),
**caractérisé en ce que** ledit procédé de solidarisation (70) permet de réaliser un assemblage (1) selon l'une quelconque des revendications 1 à 9, ledit procédé de solidarisation (70) comportant une étape préliminaire (71) consistant à positionner entre ladite première face (7) dudit châssis (2) et ladite deuxième face (8) dudit élément annexe (4) ledit au moins un organe longiligne (12, 12', 12", 14, 22, 32, 42, 52, 62, 24, 34) au moins à proximité et autour de ladite au moins une excroissance (9, 10, 19, 20), ledit au moins un organe longiligne (12, 12', 12", 22, 32, 42, 52, 62, 14, 24, 34) étant ensuite partiellement noyé à l'intérieur dudit joint de colle (6) lors de ladite étape de collage (72).

12. Procédé de désolidarisation (80) entre un châssis (2) et un élément annexe (4) rapporté au niveau d'une bordure (3) dudit châssis (2), ledit élément annexe (4) étant solidarisé audit châssis (2) au moins par collage via un joint de colle (6) agencé à l'interface entre une première face (7) dudit châssis (2) et une deuxième face (8) dudit élément annexe (4), ledit procédé de désolidarisation (80) comportant :
• une étape d'insertion (82) consistant à insérer au moins un fil (84, 85, 87, 88, 184, 284) au travers dudit au moins un joint de colle (6) entre ladite première face (7) dudit châssis (2) et ladite deuxième face (8) dudit élément annexe (4), et
• une étape de découpage (83) dudit joint de colle (6) en exerçant un effort de traction sur au moins une extrémité dudit au moins un fil (84, 85, 87, 88, 184, 284),
**caractérisé en ce que** ladite étape d'insertion (82) comporte au moins trois sous étapes de passage (90), (91) et (92) dudit au moins un fil (84, 85, 87, 88, 184, 284) transversalement au travers dudit joint de colle (6), lesdites au moins trois sous étapes de passage (90), (91) et (92) comportant d'une part une première sous étape de passage (90) et une troisième sous étape de passage (92) entre un premier côté (29) et un second côté (30) dudit joint de colle (6) et d'autre part une deuxième sous étape de passage (91) entre ledit second côté (30) et ledit premier côté (29) dudit joint de colle (6), ladite troisième sous étape de passage (92) étant effectuée en amont ladite deuxième sous étape de passage (91) suivant une direction longitudinale D dudit joint de colle (6).

13. Procédé selon la revendication 12,
**caractérisé en ce que**, au moins une excroissance (9, 10, 19, 20) étant agencée dans ledit joint de colle (6) et formant au moins un obstacle au découpage dudit joint de colle (6), ladite au moins une excroissance (9, 10, 19, 20) s'étendant au moins partiellement entre ladite première face (7) dudit châssis (2) et ladite seconde face (8) dudit élément annexe (4), lesdites au moins trois sous étapes de passage (90), (91) et (92) de ladite étape d'insertion (82) sont réalisées localement au travers dudit joint de colle (6) à proximité et autour de ladite au moins une excroissance (9, 10, 19, 20), ledit au moins un fil (84, 85, 87, 88) formant au moins une boucle (86, 96, 97) autour de ladite au moins une excroissance (9, 10, 19, 20).

14. Procédé selon l'une quelconque des revendications 12 à 13,
**caractérisé en ce que** lesdites au moins trois sous étapes de passage (90), (91) et (92) de ladite étape d'insertion (82) sont réalisées localement au travers dudit joint de colle (6) au niveau d'une forme concave (109) de ladite bordure (3) dudit châssis (2), ledit au moins un fil (184) formant au moins une boucle (186) au niveau de ladite forme concave (109) de ladite bordure (3).

15. Procédé selon l'une quelconque des revendications 12 à 14,
**caractérisé en ce que** lesdites au moins trois sous étapes de passage (90), (91) et (92) de ladite étape d'insertion (82) sont réalisées localement au travers dudit joint de colle (6) au niveau d'une surface gauche (209) de ladite bordure (3) dudit châssis (2), ledit au moins un fil (284) formant au moins une boucle (286) au niveau de ladite surface gauche (209) de ladite bordure (3).

16. Procédé selon l'une quelconque des revendications 12 à 15,
**caractérisé en ce que** ladite étape de découpage (83) est réalisée en exerçant un effort de traction sur au moins une extrémité libre (89) dudit au moins un fil (88, 184, 284) au moyen d'un organe enrouleur (100) permettant d'enrouler ledit au moins un fil (88, 184, 284), ledit effort de traction permettant de resserrer ladite au moins une boucle (96, 97, 186, 286) dudit au moins un fil (88, 184, 284).

## Patentansprüche

1. Baugruppe (1) mit einem Rahmen (2), der mit einem Rand (3) versehen ist, einem an dem Rand (3) des Rahmens (2) befestigten Anschlusselement (4), einer Klebeverbindung (6), die an der Grenzfläche zwischen einer ersten Seite (7) des Rahmens (2) und einer zweiten Seite (8) des Anschlusselements (4) angeordnet ist, und mindestens einem Vorsprung (9, 10, 19, 20), der in der Klebeverbindung (6) angeordnet ist und mindestens ein Hindernis gegen ein Durchtrennen der Klebeverbindung (6) bildet, wobei sich der mindestens eine Vorsprung (9, 10, 19, 20) mindestens teilweise zwischen der ersten Seite (7) des Rahmens (2) und der zweiten Seite (8) des Anschlusselements (4) erstreckt,
wobei die Anordnung (1) Mittel (13) zur Unterstützung des Durchtrennens der Klebeverbindung (6) umfasst, wobei die Mittel (13) zur Unterstützung des Durchtrennens mindestens ein langgestrecktes Element (12, 12', 12", 22, 32, 42, 52, 62, 14, 24, 34) umfassen, das teilweise in die Klebeverbindung (6) eingebettet ist,
**dadurch gekennzeichnet, dass** das mindestens eine langgestreckte Element (12, 12', 12", 22, 32, 42, 52, 62, 14, 24, 34) mindestens in der Nähe des mindestens einen Vorsprungs (9, 10, 19, 20) und um diesen herum angeordnet ist, und dass das mindestens eine langgestreckte Element (12, 12', 12", 22, 32, 42, 52, 62, 14, 24, 34) zwei freie Enden (15, 17, 25, 27, 35, 37, 45) und (16, 18, 26, 28, 36, 38, 46) aufweist, die aus der Klebeverbindung (6) herausstehen.

2. Baugruppe nach Anspruch 1,
**dadurch gekennzeichnet, dass** das mindestens eine langgestreckte Element (12, 14) zwei freie Enden (15, 17) und (16, 18) aufweist, die aus der Klebeverbindung (6) auf der gleichen Seite (21) in Bezug auf die Klebeverbindung (6) herausstehen.

3. Baugruppe nach Anspruch 1,
**dadurch gekennzeichnet, dass** das mindestens eine langgestreckte Element (22, 24, 32, 34, 42) zwei freie Enden (25, 27, 35, 37, 45) und (26, 28, 36, 38, 46) aufweist, die aus der Klebeverbindung (6) auf zwei gegenüberliegenden Seiten (29) und (30) in Bezug auf die Klebeverbindung (6) herausstehen.

4. Baugruppe nach einem der Ansprüche 1 bis 3,
**dadurch gekennzeichnet, dass** das mindestens eine langgestreckte Element (52, 62) mindestens einen Faden (50, 51, 53) aufweist.

5. Baugruppe nach einem der Ansprüche 1 bis 4,
**dadurch gekennzeichnet, dass** das mindestens eine langgestreckte Element (62) mindestens eine Fadendurchgangshülle (63) aufweist, die vorgesehen ist, um mindestens einen Faden (53) aufzunehmen.

6. Baugruppe nach einem der Ansprüche 1 bis 5,
**dadurch gekennzeichnet, dass** das mindestens eine langgestreckte Element (12') vorab an der ersten Seite (7) des Rahmens (2) befestigt ist.

7. Baugruppe nach einem der Ansprüche 1 bis 5,
**dadurch gekennzeichnet, dass** das mindestens eine langgestreckte Element (12") vorab an der zweiten Seite (8) des Anschlusselements (4) befestigt ist.

8. Baugruppe nach einem der Ansprüche 1 bis 7,
**dadurch gekennzeichnet, dass** das mindestens eine langgestreckte Element (12, 14, 22, 24, 32, 34) mindestens eine Halb-Schleife um den mindestens einen Vorsprung (9, 10, 19, 20) bildet.

9. Baugruppe nach einem der Ansprüche 1 bis 8,
**dadurch gekennzeichnet, dass** das mindestens eine langgestreckte Element (42) mindestens eine erste Schleife (40) um einen ersten Vorsprung (9) und mindestens eine zweite Schleife (41) um einen zweiten Vorsprung (10) bildet.

10. Luftfahrzeug (60), **dadurch gekennzeichnet, dass** es mindestens eine Baugruppe (1) nach einem der Ansprüche 1 bis 9 umfasst.

11. Verfahren (70) zum Verbinden eines Rahmens (2) und mindestens eines Anschlusselements (4), das an einem Rand (3) des Rahmens (2) befestigt wird, wobei das Verfahren zum Verbinden (70) einen Klebeschritt (72) umfasst, der darin besteht, eine Klebeverbindung (6) an der Grenzfläche zwischen einer ersten Seite (7) des Rahmens (2) und einer zweiten Seite (8) des Anschlusselements (4) anzubringen,
**dadurch gekennzeichnet, dass** das Verfahren zum Verbinden (70) es ermöglicht, eine Baugruppe (1) nach einem der Ansprüche 1 bis 9 herzustellen, wobei das Verfahren zum Verbinden (70) einen vorbereitenden Schritt (71) umfasst, der darin besteht, das mindestens eine langgestreckte Element (12, 12', 12", 14, 22, 32, 42, 52, 62, 24, 34) zwischen der ersten Seite (7) des Rahmens (2) und der zweiten Seite (8) des Anschlusselements (4) mindestens in der Nähe des mindestens einen Vorsprungs (9, 10, 19, 20) und um diesen herum zu positionieren, wobei das mindestens eine langgestreckte Element (12, 12', 12", 22, 32, 42, 52, 62, 14, 24, 34) anschließend während des Klebeschritts (72) teilweise in die Klebeverbindung (6) eingebettet wird.

12. Verfahren (80) zum Trennen eines Rahmens (2) von einem an einem Rand (3) des Rahmens (2) befestigten Zusatzelement (4), wobei das Zusatzelement (4) an dem Rahmen (2) mindestens durch Kleben mittels einer Klebeverbindung (6) befestigt ist, die an der Grenzfläche zwischen einer ersten Seite (7) des Rahmens (2) und einer zweiten Seite (8) des Zusatzelements (4) angeordnet ist, wobei das Verfahren (80) zum Trennen umfasst:
• einen Einführungsschritt (82), der darin besteht, mindestens einen Faden (84, 85, 87, 88, 184, 284) durch die mindestens eine Klebeverbindung (6) zwischen die erste Seite (7) des Rahmens (2) und die zweite Seite (8) des Anschlusselements (4) einzuführen, und
• einen Schritt des Durchtrennens (83) der Klebeverbindung (6) durch Ausüben einer Zugkraft auf mindestens ein Ende des mindestens einen Drahtes (84, 85, 87, 88, 184, 284),
**dadurch gekennzeichnet, dass** der Einführungsschritt (82) mindestens drei Durchführ-Teilschritte (90), (91) und (92) des mindestens einen Fadens (84, 85, 87, 88, 184, 284) quer durch die Klebeverbindung (6) umfasst, wobei die mindestens drei Durchführ-Teilschritte (90), (91) und (92) einerseits einen ersten Durchführ-Teilschritt (90) und einen dritten Durchführ-Teilschritt (92) zwischen einer ersten Seite (29) und einer zweiten Seite (30) der Klebeverbindung (6) und andererseits einen zweiten Durchführ-Teilschritt (91) zwischen der zweiten Seite (30) und der ersten Seite (29) der Klebeverbindung (6) umfasst, wobei der dritte Durchführ-Teilschritt (92) in einer Längsrichtung D der Klebeverbindung (6) vor dem zweiten Durchführ-Teilschritt (91) durchgeführt wird.

13. Verfahren nach Anspruch 12,
**dadurch gekennzeichnet, dass** mindestens ein Vorsprung (9, 10, 19, 20) in der Klebeverbindung (6) angeordnet ist und mindestens ein Hindernis gegen ein Durchtrennen der Klebeverbindung (6) bildet, wobei sich der mindestens eine Vorsprung (9, 10, 19, 20) mindestens teilweise zwischen der ersten Seite (7) des Rahmens (2) und der zweiten Seite (8) des Anschlusselements (4) erstreckt, die mindestens drei Durchführ-Teilschritte (90), (91) und (92) des Einführungsschritts (82) lokal durch die Klebstoffverbindung (6) in der Nähe des mindestens einen Vorsprungs (9, 10, 19, 20) und um diesen herum ausgeführt werden, wobei der mindestens eine Faden (84, 85, 87, 88) mindestens eine Schlaufe (86, 96, 97) um den mindestens einen Vorsprung (9, 10, 19, 20) herum bildet.

14. Verfahren nach einem der Ansprüche 12 bis 13,
**dadurch gekennzeichnet, dass** die mindestens drei Durchführ-Teilschritte (90), (91) und (92) des Einführungsschritts (82) lokal durch die Klebeverbindung (6) an einer konkaven Form (109) des Randes (3) des Rahmens (2) durchgeführt werden, wobei der mindestens eine Faden (184) mindestens eine Schlaufe (186) an der konkaven Form (109) des Randes (3) bildet.

15. Verfahren nach einem der Ansprüche 12 bis 14,
**dadurch gekennzeichnet, dass** die mindestens drei Durchführ-Teilschritte (90), (91) und (92) des Einführungsschritts (82) lokal durch die Klebeverbindung (6) an einer linken Oberfläche (209) der Umrandung (3) des Rahmens (2) durchgeführt werden, wobei der mindestens eine Faden (284) mindestens eine Schlaufe (286) an der linken Oberfläche (209) der Umrandung (3) bildet.

16. Verfahren nach einem der Ansprüche 12 bis 15,
**dadurch gekennzeichnet, dass** der Schritt des Durchtrennens (83) durch Ausüben einer Zugkraft auf mindestens ein freies Ende (89) des mindestens einen Fadens (88, 184, 284) mittels eines Wickelelements (100) zum Aufwickeln des mindestens einen Fadens (88, 184, 284) durchgeführt wird, wobei die Zugkraft es ermöglicht, die mindestens eine Schlaufe (96, 97, 186, 286) des mindestens einen Fadens (88, 184, 284) zu verengen.

## Claims

1. Assembly (1) comprising a frame (2) provided with an edge (3), an auxiliary element (4) attached to said edge (3) of said frame (2), an adhesive seal (6) arranged at the interface between a first face (7) of said frame (2) and a second face (8) of said auxiliary element (4), and at least one protrusion (9, 10, 19, 20) which is arranged in said adhesive seal (6) and forms at least one obstacle to the cutting of said adhesive seal (6), said at least one protrusion (9, 10, 19, 20) extending at least in part between said first face (7) of said frame (2) and said second face (8) of said auxiliary element (4), said assembly (1) comprising aids (13) for cutting said adhesive seal (6), said cutting aids (13) comprising at least one elongate member (12, 12', 12", 22, 32, 42, 52, 62, 14, 24, 34) partially embedded inside said adhesive seal (6), **characterised in that** said at least one elongate member (12, 12', 12", 22, 32, 42, 52, 62, 14, 24, 34) is arranged at least close to and around said at least one protrusion (9, 10, 19, 20), and **in that** said at least one elongate member (12, 12', 12", 22, 32, 42, 52, 62, 14, 24, 34) has two free ends (15, 17, 25, 27, 35, 37, 45) and (16, 18, 26, 28, 36, 38, 46) emerging from said adhesive seal (6).

2. Assembly according to claim 1, **characterised in that** said at least one elongate member (12, 14) has two free ends (15, 17) and (16, 18) emerging from said adhesive seal (6) on the same side (21) with respect to said adhesive seal (6).

3. Assembly according to claim 1, **characterised in that** said at least one elongate member (22, 24, 32, 34, 42) has two free ends (25, 27, 35, 37, 45) and (26, 28, 36, 38, 46) emerging from said adhesive seal (6) on two opposing sides (29) and (30) with respect to said adhesive seal (6).

4. Assembly according to any of claims 1 to 3, **characterised in that** said at least one elongate member (52, 62) comprises at least one wire (50, 51, 53).

5. Assembly according to any of claims 1 to 4, **characterised in that** said at least one elongate member (62) comprises at least one wire sheath (63) intended for receiving at least one wire (53).

6. Assembly according to any of claims 1 to 5, **characterised in that** said at least one elongate member (12') is rigidly connected to said first face (7) of said frame (2) in advance.

7. Assembly according to any of claims 1 to 5, **characterised in that** said at least one elongate member (12") is rigidly connected to said second face (8) of said auxiliary element (4) in advance.

8. Assembly according to any of claims 1 to 7, **characterised in that** said at least one elongate member (12, 14, 22, 24, 32, 34) forms at least one half-loop around said at least one protrusion (9, 10, 19, 20).

9. Assembly according to any of claims 1 to 8, **characterised in that** said at least one elongate member (42) forms at least one first loop (40) around a first protrusion (9) and at least one second loop (41) around a second protrusion (10).

10. Aircraft (60), **characterised in that** it comprises at least one assembly (1) according to any of claims 1 to 9.

11. Method (70) for rigidly connecting a frame (2) and at least one auxiliary element (4) attached to an edge (3) of said frame (2), said connection method (70) comprising a bonding step (72) consisting in applying an adhesive seal (6) to the interface between a first face (7) of said frame (2) and a second face (8) of said auxiliary element (4), **characterised in that** said connection method (70) makes it possible to create an assembly (1) according to any of claims 1 to 9, said connection method (70) comprising a preliminary step (71) consisting in positioning said at least one elongate member (12, 12', 12", 14, 22, 32, 42, 52, 62, 24, 34) between said first face (7) of said frame (2) and said second face (8) of said auxiliary element (4) at least close to and around said at least one protrusion (9, 10, 19, 20), said at least one elongate member (12, 12', 12", 22, 32, 42, 52, 62, 14, 24, 34) then being partially embedded inside said adhesive seal (6) during said bonding step (72).

12. Method (80) for disconnecting a frame (2) and an auxiliary element (4) attached to an edge (3) of said frame (2), said auxiliary element (4) being connected to said frame (2) at least by bonding by means of an adhesive seal (6) arranged at the interface between a first face (7) of said frame (2) and a second face (8) of said auxiliary element (4), said disconnection method (80) comprising:
• an insertion step (82) consisting in inserting at least one wire (84, 85, 87, 88, 184, 284) through said at least one adhesive seal (6) between said first face (7) of said frame (2) and said second face (8) of said auxiliary element (4), and
• a step (83) of cutting said adhesive seal (6) by exerting a tensile force on at least one end of said at least one wire (84, 85, 87, 88, 184, 284),
**characterised in that** said insertion step (82) comprises at least three substeps (90), (91) and (92) of passing said at least one wire (84, 85, 87, 88, 184, 284) transversely through said adhesive seal (6), said at least three passing substeps (90), (91) and (92) comprising a first substep (90) and a third substep (92) of passing said wire between a first side (29) and a second side (30) of said adhesive seal (6) and a second substep (91) of passing said wire between said second side (30) and said first side (29) of said adhesive seal (6), said third passing substep (92) being carried out upstream of said second passing substep (91) in a longitudinal direction D of said adhesive seal (6).

13. Method according to claim 12, **characterised in that**, at least one protrusion (9, 10, 19, 20) being arranged in said adhesive seal (6) and forming at least one obstacle to the cutting of said adhesive seal (6), said at least one protrusion (9, 10, 19, 20) extending at least in part between said first face (7) of said frame (2) and said second face (8) of said auxiliary element (4), said at least three passing substeps (90), (91) and (92) of said insertion step (82) are carried out locally through said adhesive seal (6) close to and around said at least one protrusion (9, 10, 19, 20), said at least one wire (84, 85, 87, 88) forming at least one loop (86, 96, 97) around said at least one protrusion (9, 10, 19, 20).

14. Method according to either claim 12 or claim 13, **characterised in that** said at least three passing substeps (90), (91) and (92) of said insertion step (82) are carried out locally through said adhesive seal (6) at a concave shaped portion (109) of said edge (3) of said frame (2), said at least one wire (184) forming at least one loop (186) around said concave shaped portion (109) of said edge (3).

15. Method according to any of claims 12 to 14, **characterised in that** said at least three passing substeps (90), (91) and (92) of said insertion step (82) are carried out locally through said adhesive seal (6) at a left surface (209) of said edge (3) of said frame (2), said at least one wire (284) forming at least one loop (286) around said left surface (209) of said edge (3).

16. Method according to any of claims 12 to 15, **characterised in that** said cutting step (83) is carried out by exerting a tensile force on at least one free end (89) of said at least one wire (88, 184, 284) by means of a winding member (100) for winding up said at least one wire (88, 184, 284), said tensile force making it possible to tighten said at least one loop (96, 97, 186, 286) of said at least one wire (88, 184, 284).
